# EUROPÄISCHE PATENTSCHRIFT

(11) **EP 2 497 145 B1**
(45) Veröffentlichungstag und Bekanntmachung des Hinweises auf die Patenterteilung: **02.04.2014**
(21) Anmeldenummer: 10779298.8
(22) Anmeldetag: 08.11.2010
(51) Int. Cl.: H01M 2/02, H01M 10/04, H01M 10/625, H01M 10/647, H01M 10/6557, H01M 10/6567

(54) **ENERGIESPEICHERVORRICHTUNG**
ENERGY STORE DEVICE
DISPOSITIF ACCUMULATEUR D'ÉNERGIE

(30) Priorität: 06.11.2009 DE 102009052254
(43) Veröffentlichungstag der Anmeldung: 12.09.2012
(73) Patentinhaber: Behr GmbH & Co. KG, 70469 Stuttgart (DE)
(72) Erfinder: MOSER, Michael, 73492 Rainau (DE); ISERMEYER, Tobias, 74245 Löwenstein (DE); FEHRENBACHER, Christoph, 70597 Stuttgart (DE); HECKENBERGER, Thomas, 70771 Leinfelden-Echterdingen (DE); HERRMANN, Hans-Georg, Stuttgart 70619 (DE); NEUMEISTER, Dirk, 70374 Stuttgart (DE); RIEDEL, Rudolf, 75173 Pforzheim (DE); ZAHN, Christian, 01129 Dresden (DE)
(74) Vertreter: Grauel, Andreas
(86) Internationale Anmeldenummer: PCT/EP2010/066990
(87) Internationale Veröffentlichungsnummer: WO 2011/054952

(56) Entgegenhaltungen:
- EP-A2- 2 200 109
- WO-A1-2006/009062
- WO-A1-2007/063877
- WO-A1-2009/061090
- JP-A- 2004 103 258
- JP-A- 2005 302 698
- US-A1- 2006 093 901
- US-A1- 2009 208 828

## Beschreibung

Die vorliegende Erfindung bezieht sich auf eine Energiespeichervorrichtung sowie eine Verwendung einer Kühlvorrichtung zur Kühlung eines Stapels aus einer Mehrzahl von elektrochemischen Energiespeichereinheiten.

Für eine Anbindung von Zellen, insbesondere Li-Ion-Zellen, an eine Wärmesenkebesteht die Möglichkeit einer Anbindung von Kühlblechen in verschiedenen Ausführungen an einer Kühlplatte.

Die Druckschrift 102007066944.4 beschreibt u.a. eine Kühlung von Batterieflachzellen, die als thermischen Pfad Kühlbleche vorweist. Es wird erwähnt, dass die Bleche mit der Kühlplatte in thermischem Kontakt stehen; dieser Kontakt sollte durch Vergießen hergestellt werden.

Die Patentschrift DE 102 23 782 B4 beschreibt eine Kühleinrichtung von Rundzellen, bestehend aus einer Grundplatte und seitlich in Längsrichtung an den Zellen anliegenden Kühlelementen. Die Zellen sind kraftschlüssig mit der Kühleinrichtung verbunden, die anliegenden Kühlelemente verfügen über Dehnfugen, um die Problematik der Spaltbildung und des Wärmeübergangs zu verbessern.

Die Druckschrift JP 2005 302698 A offenbart eine Batterieanordnung und ein Fahrzeug, in welchem eine entsprechend Batterieanordnung vorgesehen ist. Die Batterieanordnung weist 8 Batteriesatpel auf, wobei jeder Stapel aus 10 Sekundärzellen gebildet ist. Weiterhin sind Wärmesenken vorgesehen, zwischen welchen die Sekundärzellen angeordnet sind. Die Batterieanordnung ist dabei in einem Gehäuse eingefasst. Weitehrin weist das Gehäuse einen Einlasskanal und einen Auslasskanal auf, durch welchen der Hohlraum im Inneren des Gehäuses, in welchem die Batterieanordnung angeordnet ist, mit der Umgebung in Fluidkommuniaktion steht. Über einen im Auslasskanal angeordneten Lüfter, kann ein Fluidstrom von der Umgebung durch den Einlasskanal durch den Hohlraum und durch den Auslasskanal zur Umgebung erzeugt werden.

Der Vortrag "The Impact of Simulation Analysis on the Development of Battery Cooling Systems for Hybrid_Vehicles" (von Peter Pichler, Product Manager Battery Systems, MAGNA STEYR Fahrzeugtechnik AG & Co. KG) auf der Advanced Automotive Battery Conference ( AABC) 2008 beschreibt einen modularen Batterieaufbau, bei dem die Wärmesenke jedoch schon in den Modulen intergriert ist. Bei der Batteriekomplettierung wird nur noch die Verbindung der einzelnen Kühlkanäle hergestellt.

Die Patentschrift US 2008/0090137 beschreibt einen modularen Aufbau einer Batterie, bei der das Modul aus Zellen und Kühlblechen besteht. Die fertige Batterie wird mit Luft gekühlt.

Die Kühlkanäle bzw. die Verdampferplatte erlauben in den meisten Fällen nur eine einseitige Anbindung der Zellen, was die Wärmeverteilung in der Zelle verschlechtert. Bauraumbedingt ist die Kontaktfläche zur Wärmeübertragung zur Wärmesenke begrenzt, wodurch die Wärmeabfuhr besonders bei großer Wärmeentwicklung erschwert wird. Die dabei verwendeten kraftschlüssigen Verbindungen zur Wärmesenke sind aufwendig und teilweise kompliziert und dabei schlechter als stoffschlüssige Verbindungen. Die Zugänglichkeit für die Montage verhindert oft eine zusätzliche mechanische Unterstützung, insbesondere von Coffeebag- Zellen, z.B. durch einen Rahmen oder formschlüssiges Umspritzen. Für stoffschlüssige Verbindungen werden hauptsächlich Verfahren wie Löten oder Schweißen eingesetzt, die aber die Zellen schädigen.

Des weiteren muss die Wärmesenke bzw. Verdampferplatte für jedes Designkonzept eines Moduls oder einer gesamten Batterie neu ausgelegt werden und erhöht so den Entwicklungsaufwand und die Variantenvielfalt.

Außerdem wird die Verschalung einzelner Kühlmodule mit eigener Wärmesenke aufwendig und erhöht die Gefahr von Undichtigkeiten. Eine Gesamtkühlplatte für mehrere Module zusammen kann leicht Bauraumdimensionen erreichen, die die Herstellung derselben kompliziert machen. Der teilweise massive Aufbau von Wärmesenke und den zusätzlichen Verbindungselementen wirkt sich zudem auf das Gesamtgewicht der Batterie negativ aus.

Es ist die Aufgabe der vorliegenden Erfindung, eine verbesserte Vorrichtung zur Kühlung von elektrochemischen Energiespeichereinheiten sowie eine neue Verwendung einer Kühlvorrichtung zu schaffen.

Diese Aufgabe wird durch eine Energiespeichervorrichtung gemäß Anspruch 1 sowie eine Verwendung einer Kühlvorrichtung gemäß Anspruch 13 gelöst.

Der vorliegenden Erfindung liegt die Erkenntnis zugrunde, dass eine Verwendung von modifizierten Serienteilen und Verfahren auf der Basis von Flachrohrkühlmittelkühlern bzw. -verdampfern eine Reduzierung von Entwicklungsaufwand und Herstellkosten ermöglichen kann. Kern der Erfindung ist neben einer verbesserten Modularität auch eine Erhöhung der Wärmeabfuhr, eine Verbesserung der Wärmeverteilung in der Zelle durch eine Anbindung von Wärmesenken an mehreren Seiten der Zellen sowie eine verbesserte Montagemöglichkeit der Verbindung von Kühlblech und Wärmesenke. Zudem kann durch angepasste Kühlbleche und eine Anbindung der Flachrohre in nicht genutzten Zwischenräumen der Zellen die Packungsdichte optimiert werden. Daneben sind eine Reduzierung des Gewichts sowie eine Erhöhung der mechanischen Stabilität bei gleichzeitiger Vereinfachung der Montage möglich.

Vorteilhafterweise können durch die Verwendung modifizierter Serienteile der Entwicklungsaufwand und die Herstellkosten verringert werden. Die Verwendung eines Flachrohrkühlers bzw. -verdampfers erlaubt einen sehr variablen, modularen Aufbau. Durch die optimale Ausnutzung von Leerräumen kann eine hohe Packungsdichte erzielt werden. Da entsprechend dem Kühlungsbedarf und der Ableiterposition eine variable Anordnung von Wärmesenken realisierbar ist, kann außerdem eine erhöhte Wärmeabfuhr und eine bessere Wärmeverteilung in der Zelle ermöglicht werden. Neben der Gewichtsreduzierung ist auch eine Unterstützung der mechanischen Stabilität bei gleichzeitiger Vereinfachung der Montage und Verbesserung der Anbindungsqualität gegeben.

Gemäß einer weiteren Ausführungsform ist der erfinderische Ansatz insbesondere für prismatische Hardcase- und Coffebag-Zellen verwendbar. Es findet eine Erhöhung der Wärmeabfuhr durch direkte Anbindung der Zelle an die Wärmesenke statt. Zudem kann durch eine variable Anzahl der Flachrohre eine Anpassung der Kühlleistung erfolgen. Vorteilhafterweise erlaubt der erfinderische Ansatz einen Toleranzausgleich und Flexibilität im Zellverbund. Weiterhin kann aufgrund der geringen Übergangswiderstände eine Kühlung von Batteriezellen mit vergleichsweise hohen Vorlauftemperaturen ermöglicht werden.

Gemäß dem erfindungsgemäßen Ansatz ergeben sich somit die weiteren Vorteile einer stoffschlüssigen, prozesssicheren Fügung der Flachrohre mit einem Sammelkasten, einer verbesserten Wärmeabfuhr in der Zelle durch direkte Anbindung an die Wärmesenke und eine bedarfsgerechte Kühlleistung durch die variable Anzahl von Flachrohren.

Gemäß einer weiteren Ausführungsform der Erfindung ist der hierin beschriebene Ansatz insbesondere für Coffebag-Zellen verwendbar. Durch direkte Anbindung der Zelle bzw. der Zellableiter an die Wärmesenke ist eine Erhöhung bzw. Verbesserung der Wärmeabfuhr in der Zelle realisierbar.

Gemäß einer weiteren Ausführungsform der Erfindung ergeben sich die Vorteile einer verbesserten Montage, einer größeren Kontaktfläche sowie eines Einrastens des Energiespeichermoduls in eine Strukturkomponente oder ähnliches.

Die vorliegende Erfindung schafft eine Energiespeichervorrichtung mit folgenden Merkmalen: Einer Mehrzahl von Kühlkanälen, die voneinander beabstandet im Wesentlichen parallel in einer Ebene angeordnet und ausgebildet sind, um von einem Kühlfluid durchströmt zu werden; mindestens einem Sammelkasten, der in der Ebene mit und im Wesentlichen senkrecht zu der Mehrzahl von Kühlkanälen angeordnet und mit denselben verbunden ist, um das Kühlfluid aus denselben aufzunehmen oder an dieselben abzugeben; und einem Stapel aus einer Mehrzahl von elektrochemischen Energiespeichereinheiten, die so angeordnet sind, dass zwischen zwei benachbarten Kühlkanälen der Mehrzahl von Kühlkanälen jeweils mindestens eine Energiespeichereinheit aus der Mehrzahl von elektrochemischen Energiespeichereinheiten angeordnet ist wobei die Kühlkanäle der Mehrzahl von Kühlkanälen als Flachrohre ausgebildet ist, wobei jede der Mehrzahl von elektrochemischen Energiespeichereinheiten in mindestens einem verjüngten Randbereich einen Fortsatz aufweist, derart, dass zwischen den Fortsätzen der Mehrzahl von elektrochemischen Energiespeichereinheiten jeweils Aussparungen gebildet sind, und wobei die Kühlkanäle in den Aussparungen angeordnet sind , wobei zwischen den Fortsätzen und den Kühlkanälen Isolatoren angeordnet sind, wobei zwischen benachbarten elektrochemischen Energiespeichereinheiten Kühlbleche angeordnet sind, wobei die Kühlbleche thermisch mit den Kühlkanälen gekoppelt sind und die Kühlbleche auf einer Höhe des verjüngten Randbereichs eine Biegung in Richtung des Fortsatzes einer benachbarten elektrochemischen Energiespeichereinheit aufweisen.

Die Energiespeichervorrichtung setzt sich aus einer elektrochemischen Energiespeichereinheit und mindestens einer Kühlvorrichtung zusammen. Sie kann in einem Fahrzeug mit Hybrid- oder Elektroantrieb eingesetzt werden. Die elektrochemische Energiespeichereinheit kann eine Batterie oder ein Akkumulator sein und beispielsweise Lithium-Ionen-Zellen umfassen. Bei der Kühlvorrichtung kann es sich um eine Wärmesenke für die elektrochemische Energiespeichereinheit handeln. Die Kühlkanäle können nebeneinander angeordnet und an ihren jeweiligen Enden mit Sammelkästen verbunden sein. Die Sammelkästen können ein Kühlfluid aus einem Kühlkreislauf aufnehmen und wieder an diesen abgeben. Jede elektrochemische Energiespeichereinheit kann zwei gegenüberliegende größere Hauptflächen und vier kleinere Seitenflächen aufweisen. Die Seitenflächen können Randbereiche ausbilden. Der Stapel kann so ausgebildetn sein, dass die Hauptflächen benachbarter elektrochemischer Energiespeichereinheiten aufeinander liegen oder einander zugewandt sind. Gemäß unterschiedlichen Ausführungsformen können die Kühlkanäle die elektrochemischen Energiespeichereinheiten in unterschiedlichen Bereichen derselben kontaktieren. Die Kühlkanäle können durch Kühlrohre gebildet werden.

Flachrohre weisen den Vorteil auf, dass sie besser in Aussparungen zwischen benachbarten elektrochemischen Energiespeichereinheiten eingepasst werden können.

Die Isolatoren können als Materialstück oder als Lack ausgebildet sein. Die Isolatoren können einen ungewollten Stromfluss zwischen den Ableitern und der Kühlvorrichtung verhindern.

Die Kühlbleche und Kühlkanäle können sich berühren, so dass die Kühlkanäle über die Kühlbleche die Wärme aus den elektrochemischen Energiespeichereinheiten ableiten können. Es kann ein Kraft- oder Stoffschluss zwischen Kühlbleche und Energiespeichereinheit sowie zwischen Kühlbleche und Rohr bestehen.

Durch die Biegung in Richtung des Fortsatzes ist genügend Raum für ein Einpassen der Rohre zwischen die Randbereiche der elektrochemischen Energiespeichereinheiten gegeben.

Die elektrochemischen Energiespeichereinheiten können beispielsweise jeweils eine Ummantelung aufweisen, und die Fortsätze können durch Siegelungen der Ummantelungen gebildet sein. Solche Siegelungen werden beispielsweise bei Coffeebag-Zellen zur Schließung der Zellummantelung verwendet. In diesem Fall können die Kühlkanäle zwischen den Siegelungen angeordnet sein. Auch kann die Mehrzahl von elektrochemischen Energiespeichereinheiten jeweils mindestens einen Stromableiter aufweisen, der den Fortsatz ausbilden kann. In diesem Fall können die Kühlkanäle zwischen den Stromableitern angeordnet sein.

Gemäß einer weiteren Ausführungsform können die zwischen benachbarten elektrochemischen Energiespeichereinheiten angeordneten Kühlbleche gefaltet sein und auf einer Höhe des verjüngten Randbereichs eine Biegung in Richtung der Fortsätze benachbarter elektrochemischer Energiespeichereinheiten aufweisen. Dabei kann ein Querschnitt der Kühlkanäle eine Keilform aufweisen, die einer durch den verjüngten Randbereich von zwei benachbarten elektrochemischen Energiespeichereinheiten gebildeten Aussparung entspricht.

Weiterhin kann jeder der Mehrzahl von Kühlkanälen einen Kühlfortsatz aufweisen. Die Mehrzahl von elektrochemischen Energiespeichereinheiten kann so angeordnet sein, dass zwischen zwei benachbarten Kühlfortsätzen der Mehrzahl von Kühlkanälen jeweils mindestens eine elektrochemische Energiespeichereinheit aus der Mehrzahl von elektrochemischen Energiespeichereinheiten angeordnet ist. Somit können die Kühlfortsätze zwischen den elektrochemischen Energiespeichereinheiten angeordnet sein und sich die Kühlkanäle außerhalb der elektrochemischen Energiespeichereinheiten befinden, Dazu können die Kühlkanäle in oder auf einer Kühlplatte angeordnet sein,

Gemäß einer weiteren Ausführungsform kann jeweils ein Mittelbereich der mindestens einen elektrochemischen Energiespeichereinheit aus der Mehrzahl von elektrochemischen Energiespeichereinheiten zwischen zwei benachbarten Kühlkanälen der Mehrzahl von Kühlkanälen angeordnet sein. Vorteilhafterweise kann so eine einzige Kühlvorrichtung zur Kühlung des Stapels aus elektrochemischen Energiespeichereinheiten ausreichend sein.

Außerdem kann die Verwendung einer Kühlvorrichtung mit einer Mehrzahl von Kühlkanälen, die voneinander beabstandet im Wesentlichen parallel in einer Ebene angeordnet und ausgebildet sind, um von einem Kühlfluid durchströmt zu werden, und mindestens einem Sammelkasten, der in der Ebene mit und im Wesentlichen senkrecht zu der Mehrzahl von Kühlkanäle angeordnet und mit denselben verbunden ist, um das Kühlfluid aus denselben aufzunehmen oder an dieselben abzugeben, zur Kühlung eines Stapels aus einer Mehrzahl von elektrochemischen Energiespeichereinheiten vorteilhaft sein. Der erfindungsgemäße Ansatz schafft somit eine neuartige Verwendung einer aus modifizierten Serienteilen bestehenden Kühlvorrichtung.

Vorteilhafte Ausführungsbeispiele der vorliegenden Erfindung werden nachfolgend Bezug nehmend auf die beiliegenden Zeichnungen näher erläutert. Es zeigen:
- Fig. 1: eine Ansicht einer Kühlvorrichtung gemäß einem Ausführungsbeispiel ;
- Fig. 2: eine weitere Ansicht der Kühlvorrichtung;
- Fig. 3: eine Ansicht eines Energiespeichers gemäß einem Ausführungsbeispiel ;
- Fig. 4: eine Ansicht eines erfindungsgemäßen Energiespeichers gemäß einem weiteren Ausführungsbeispiel;
- Fig. 5: eine Ansicht einer Energiespeichervorrichtung gemäß einem Ausführungsbeispiel der Erfindung;
- Fig. 6: eine Ansicht einer Energiespeichervorrichtung gemäß einem weiteren Ausführungsbeispiel;
- Fig. 7: eine Ansicht einer Energiespeichervorrichtung gemäß einem weiteren Ausführungsbeispiel;
- Fig. 8: eine Darstellung für eine Montage der Energiespeichervorrichtung aus Fig. 7;
- Fig. 9: eine Ansicht einer Energiespeichervorrichtung gemäß einem weiteren Ausführungsbeispiel;
- Fig. 10: eine Ansicht einer Energiespeichervorrichtung gemäß einem weiteren Ausführungsbeispiel;
- Fig. 11: eine weitere Ansicht der Energiespeichervorrichtung aus Fig. 10;
- Fig. 12: eine Ansicht einer Energiespeichervorrichtung gemäß einem weiteren Ausführungsbeispiel;
- Fig. 13: eine Ansicht einer Energiespeichervorrichtung gemäß einem weiteren Ausführungsbeispiel;
- Fig. 14: eine Ansicht eines Energiespeichers gemäß einem weiteren Ausführungsbeispiel der Erfindung;
- Fig. 15: eine Ansicht einer Kühlvorrichtung gemäß einem Ausführungsbeispiel der Erfindung;
- Fig. 16: eine Detailansicht der erfindungsgemäßen Kühlvorrichtung aus Fig. 15;
- Fig. 17: eine Darstellung für eine Montage einer Energiespeichervorrichtung gemäß einem weiteren Ausführungsbeispiel der Erfindung;
- Fig. 18: eine Ansicht einer Energiespeichervorrichtung gemäß einem weiteren Ausführungsbeispiel der Erfindung;
- Fig. 19: eine Ansicht einer Energiespeichervorrichtung gemäß einem weiteren Ausführungsbeispiel der Erfindung; und
- Fig. 20: eine Detailansicht eines Energiespeichers gemäß einem weiteren Ausführungsbeispiel der Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird. Ebenso wird der Übersichtlichkeit halber bei einem mehrmaligen Vorkommen eines identischen Elements in einer Figur jeweils nur eines der identischen Elemente mit dem entsprechenden Bezugszeichen versehen.

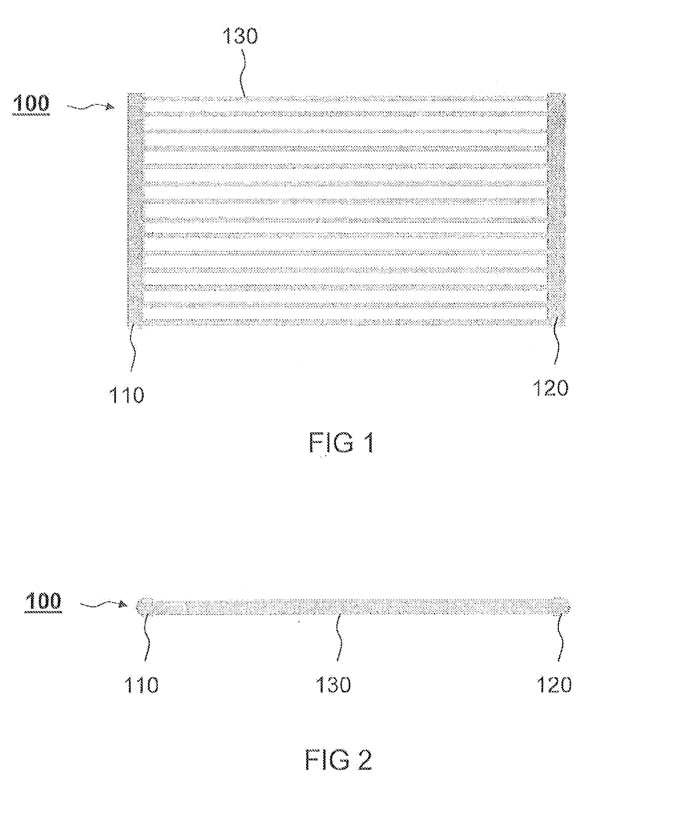

Fig. 1 zeigt eine Ansicht einer Kühlvorrichtung, gemäß einem Ausführungsbeispiel, die für eine Energiespeichervorrichtung eingesetzt werden kann. Gezeigt ist ein Flachrohrkühler bzw. -verdampfer 100 ohne Wellrippen. Der Flachrohrkühler bzw. -verdampfer 100 wird im Folgenden auch als Kühlvorrichtung 100 bezeichnet. Diese umfasst einen ersten Sammelkasten 110, einen zweiten Sammelkasten 120 sowie eine Mehrzahl von Kühlkanälen 130, die zwischen dem ersten Sammelkasten 110 und dem zweiten Sammelkasten 120 angeordnet sind. Wie Fig. 1 zeigt, sind die Kühlkanäle 130 in Form von geradlinigen Rohren ausgebildet, die parallel und beabstandet voneinander angeordnet sind. An ihren jeweiligen Enden sind die Rohre mit den Sammelkasten 110, 120 so verbunden, dass die gesamte Kühlvorrichtung 100 von einem Kühlfluid durchströmt werden kann. Die Kühlkanäle 130 können z.B. als Flachrohre ausgebildet sein.

Fig. 2 zeigt eine weitere Ansicht der in Fig. 1 gezeigten Kühlvorrichtung 100. Gezeigt sind der erste Wasserkasten 110, der zweite Wasserkasten 120 sowie ein Kühlkanal 130.

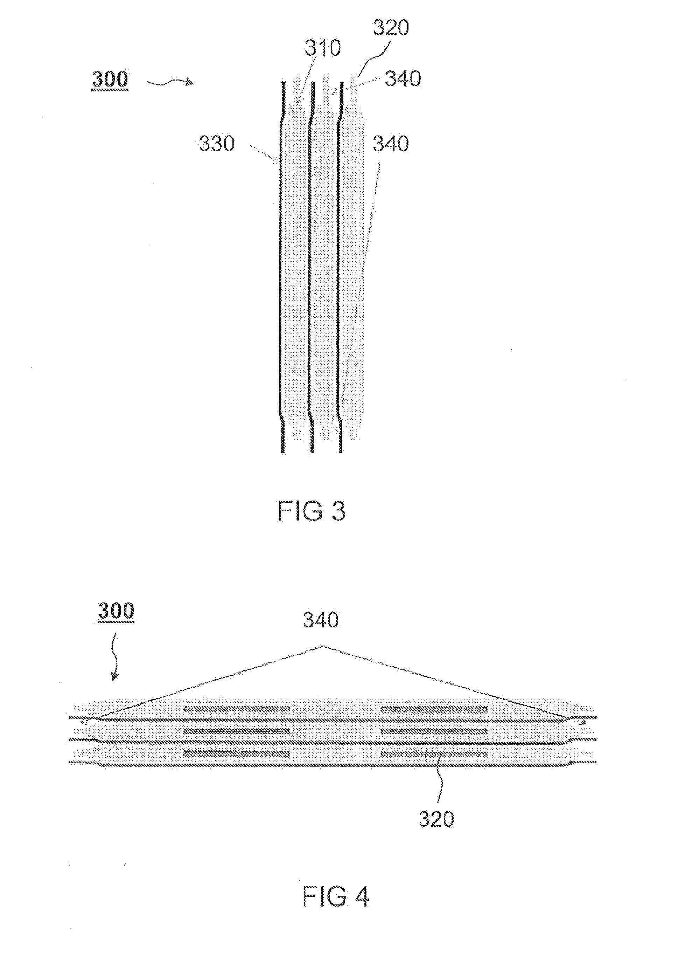

Fig. 3 zeigt eine Ansicht eines Energiespeichers 300 gemäß einem Ausführungsbeispiel. Der Energiespeicher 300 umfasst elektrochemische Energiespeichereinheiten oder Zellen 310 mit Fortsätzen 320 sowie Kühlbleche 330. Die elektrochemischen Energiespeichereinheiten 310 und die Kühlbleche 330 sind als Stapel angeordnet. Dabei sind die Kühlbleche 330 jeweils zwischen zwei elektrochemischen Energiespeichereinheiten 310 angeordnet und kontaktieren diese. Die Kühlbleche 330 weisen Biegungen entlang einer Kontur eines Randbereichs der elektrochemischen Energiespeichereinheiten 310 auf. Die Fortsätze 320 können beispielsweise als Siegelungen oder Ableiter der elektrochemischen Energiespeichereinheiten 310 ausgebildet sein und sind an Endabschnitten der Energiespeichereinheiten 310 angeordnet. Zwischen den Endabschnitten der Kühlbleche 330 und den Fortsätzen 320 sind Zwischenräume oder Aussparungen 340 ausgebildet.

Der Energiespeicher 300 kann auch mehr oder weniger Energiespeichereinheiten 310 und Kühlbleche 330 als in Fig. 3 und weiteren Figuren abgebildet aufweisen.

Fig. 4 zeigt eine weitere Ansicht des Energiespeichers 300 gemäß einem Ausführungsbeispiel. Die Energiespeichereinheiten 310 weisen weitere Fortsätze 320 auf, die als Ableiter ausgebildet sind.

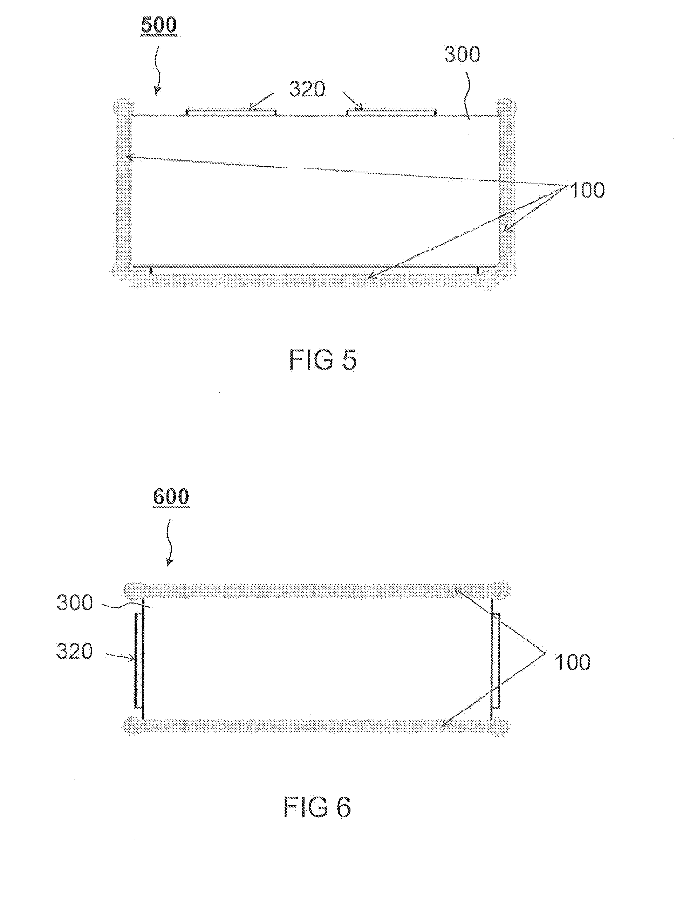

Die Figuren 5 und 6 zeigen Ansichten erfindungsgemäßer Energiespeichervorrichtungen 500, 600 gemäß unterschiedlichen Ausführungsbeispielen.

In Fig. 5 umfasst die Energiespeichervorrichtung 500 den Energiespeicher 300 sowie drei Kühlvorrichtungen oder Kühler 100 in einer Anordnung um die Zellen des Energiespeichers 300. Gemäß diesem Ausführungsbeispiel ist je eine Kühlvorrichtung 100 seitlich und unten an dem Energiespeicher 300 angeordnet. Eine Oberseite des Energiespeichers 300, die die Ableiter 320 aufweist, bleibt frei. Die Kühlkanäle der Kühlvorrichtung 100 können innerhalb der Aussparungen zwischen den Fortsätzen der Zellen des Energiespeichers 310 angeordnet sein. Dazu können die Abmessungen der Kühlkanäle sowie die Abstände zwischen benachbarten Kühlkanälen an die Abmessungen der Aussparungen des Energiespeichers 300 angepasst sein. Ferner können die Längen der Kühlkanäle sowie die Längen der Sammelkästen der Kühlvorrichtungen 100 an die Außenabmessungen des Energiespeichers 300 angepasst sein. Dagegen ist bei der in Fig. 6 gezeigten Energiespeichervorrichtung 600 je eine Kühlvorrichtung 100 oben und unten an dem Energiespeicher 300 angeordnet, während die Seiten des Energiespeichers 300, die die Ableiter 320 aufweisen, frei bleiben.

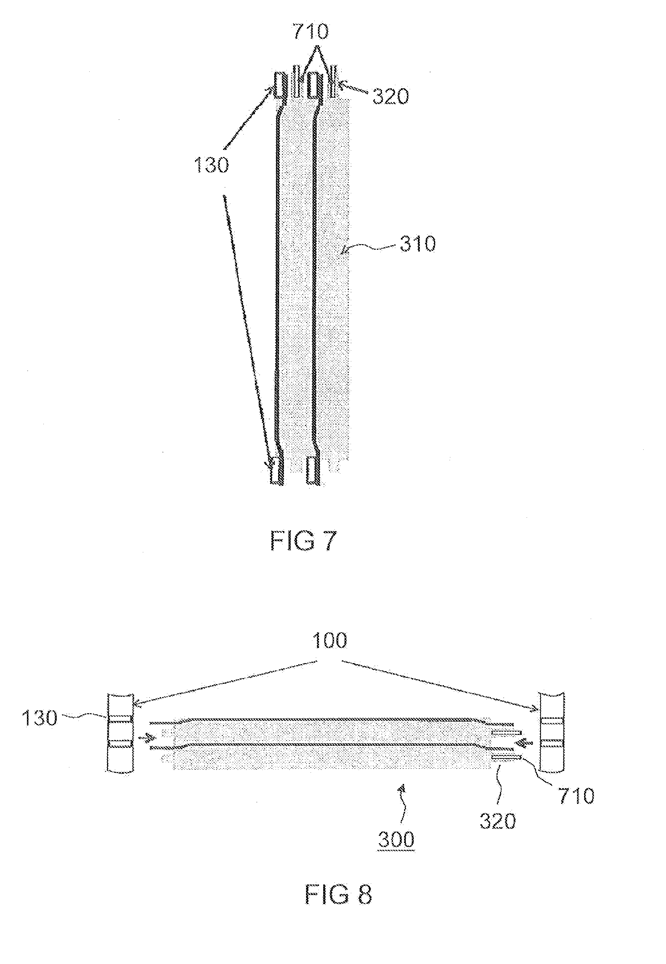

Fig. 7 zeigt eine Ansicht einer Energiespeichervorrichtung gemäß einem weiteren Ausführungsbeispiel. Die Energiespeichervorrichtung weist wiederum mit Fortsätzen 320 versehene elektrochemische Energiespeichereinheiten 310 sowie Kühlbleche 330 auf. Die Energiespeichereinheiten 310 können mit einer mechanischen Unterstützung versehen sein. Bei dem in Fig. 7 gezeigten Ausführungsbeispiel bilden die Fortsätze 320 Ableiter aus. Die Kühlkanäle 130 der Kühlvorrichtung 100 sind hier als Flachrohre ausgebildet. Wie aus Fig. 7 ersichtlich ist, kontaktieren die Kühlkanäle 130 die Kühlbleche 330 zur Wärmeableitung aus den elektrochemische Energiespeichereinheiten 310. Zur Vermeidung eines Stromflusses zwischen den Kühlkanälen 130 und den Ableitern 320 sind die Ableiter 320 mit Isolatoren 710 versehen. Die Isolation kann beidseitig der Ableiter 320 angeordnet sein.

In Fig. 8 ist eine Darstellung für eine Montage der Energiespeichervorrichtung aus Fig. 7 gezeigt. An gegenüberliegenden Seiten des Energiespeichers 300 wird jeweils eine Kühlvorrichtung in Form eines Kühlers 100 mit Kühlkanälen 130 angeordnet. Dabei kann es sich jeweils um die in Fig. 1 gezeigte Kühlvorrichtung 100 handeln. In Fig. 8 weist die rechte Seite des Energiespeichers 300 die Isolatoren 710 auf, so dass in dem zusammengebauten Zustand der Energiespeichervorrichtung 700, wie er in Fig. 7 zu sehen ist, ein Stromfluss zwischen den Ableitern 320 und den Kühlkanälen 130 vermieden werden kann. Auf der linken Seite sind keine Isolatoren erforderlich. Hier kann es sich bei den Fortsätzen beispielsweise um Siegelungen handeln.

Im Folgenden wird die Anbindung von Zellen 310 über Kühlbleche 330 an die Wärmesenke 100 mit Flachrohren130, wie sie im Zusammenhang mit den Ausführungsbeispielen aus den Figuren 1 bis 8 illustriert wurde, nochmals erläutert. Bereits serienmäßig hergestellte Flachrohrkühler bzw. -verdampfer 100 werden ohne Wellrippenprofil und mit gegebenenfalls modifizierten Sammelkästen 110, 120 hergestellt, in der Breite den Zellen 310 und/oder den Kühlblechen 330 und in der Gesamtlänge der jeweils gewünschten Anzahl von Zellen 310 angepasst. Die Verwendung dieser modifizierten Serienteile verringert den Entwicklungsaufwand und die Herstellkosten und erlaubt einen sehr variablen, modularen Aufbau.

Die Zellen 310 sind, z.B. durch Kleben, an die Kühlbleche 330 angebunden. Die Kühlbleche 330 sind an eine Oberfläche der Zellen 310 bzw. an eine Geometrie einer Ummantelung der Zellen 310 angepasst, wie es beispielsweise in Fig. 3 gezeigt ist. Durch die Anpassung der Kühlbleche 330 an die Zellgeometrie entstehen zwischen den aufgereihten Zellen 310 Zwischenräume oder Aussparungen 340, insbesondere bei Coffeebag-Zellen auf Höhe der Siegelung 320.

Die Kühlbleche 330 können z.B. durch Kleben an die Flachrohre 130 angebunden werden. Die Flachrohre 130 verlaufen durch den nicht genutzten Zwischenraum 340 zwischen den Zellen, insbesondere bei Coffeebag-Zellen entlang den Siegelrändern 320. Dadurch kann der vorhandene Bauraum optimal ausgenutzt und die Packungsdichte erhöht werden.

Wie die Figuren 5 und 6 zeigen, können je nach Bedarf an Kühlleistung ein oder mehrere Flachrohrkühler bzw.- -verdampfer 100 um die Zellen 310 herum angeordnet werden. Die Kühler 100 können dabei so angeordnet werden, dass sie nicht in der Nähe der Ableiter 320 positioniert werden, z.B. unten und seitlich bei oben angebrachten Ableitern 320 oder oben und unten bei seitlich angebrachten Ableitern 320. Durch die entsprechende Isolation 710 ist auch eine Anordnung zwischen den Zellen 310 im Bereich der Ableiter 320 bzw. der Siegelung 320 der Zelle 310 unterhalb der Ableiter 320 möglich. Das entsprechende Ausführungsbeispiel ist in den Figuren 7 und 8 gezeigt.

Coffeebag-Zellen 310 können bereits im Vorfeld zusammen mit den angebundenen Kühlblechen 330 durch Rahmen, formschlüssiges Umspritzen oder Vergussmassen mechanisch unterstützt werden. Ausgespart bleiben dabei die Stellen, die bei der späteren Montage mit den Flachrohren 130 zur Wärmeübertragung verbunden werden. In einem derartigen Aufbau können bereits Verbindungselemente wie beispielsweise Rasthacken, Clips, o.ä. integriert sein, die ein einfaches Zusammenstecken der einzelnen Segmente ermöglichen. Desweiteren können die Zellen dadurch gegeneinander isoliert werden. An einem so aufgebauten Stapel von Zellen 310 können anschließend ein oder mehrere Flachrohrkühler bzw. -verdampfer 100 in der beschriebenen Art und Weise angebracht werden. Durch den Abstand zwischen den Flachrohren 130 ist ein einfaches Einfahren bzw. Anbringen der Flachrohrkühler bzw. -verdampfer 100 in den Stapel bzw. die Kühlbleche 330 möglich. Dies ist im Zusammenhang mit der Montagedarstellung aus Fig. 8 illustriert. Bereits im Vorfeld aufgebrachte Klebeschichten werden dadurch nicht beschädigt. Desweiteren bietet sich durch den Abstand zwischen den Flachrohren 130 z.B. die Möglichkeit, die Ausführung einer Klebeanbindung zwischen Flachrohren 130 und Kühlblechen 330 unter optimalen Parametern bezüglich des Anpressdrucks zu realisieren. Die Verwendung von Rohren 130 an Stelle von Kühlplatten verringert das Gewicht der gesamten Kühlung.

Alternativ können Kühlplatten statt Flachrohren 130 bei entsprechend geänderten Kühlblechen 330 angebracht werden.

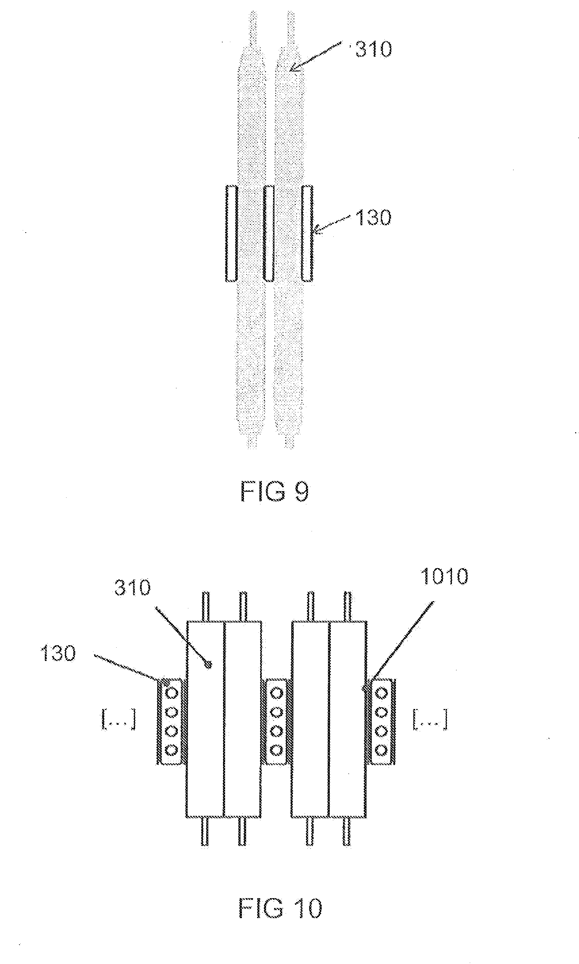

Eine weitere Möglichkeit wäre, die Flachrohre 130 direkt an die Zelle 310 anzubinden, wenn eine Dicke des Zellgehäuses bzw. des Zellmantels eine entsprechend gute Wärmeleitung wie das Kühlblech 330 aufweist. Entsprechende Ausführungsbeispiele dieses Ansatzes sind in den Figuren 9 bis 13 illustriert.

Fig. 9 zeigt eine Darstellung einer Energiespeichervorrichtung, gemäß einem weiteren Ausführungsbeispiel mit einer Anordnung aus Flachrohren 130 und Zellen 310. Hier ist jeweils ein Flachrohr 130 zwischen zwei Zellen 310 in einem Mittelbereich der Zellen 310 angeordnet. Die Flachrohre 130 können dabei genau mittig oder versetzt zur Mitte angeordnet sein und eine geringe Dicke jedoch eine große Höhe aufweisen. Auf diese Weise ist die Kontaktfläche zwischen den Flachrohren und den Zellen 310 möglichst groß, die Breite des Stapels aus den Zellen 310 wird jedoch nur geringfügig vergrößert. Die Flachrohre 130 können Kühlkanäle der in den Figuren 1 und 2 gezeigten Kühlvorrichtungen darstellen.

Fig. 10 zeigt eine Schnittdarstellung eines zu dem in Fig. 9 gezeigten alternativen Ausführungsbeispiels, bei dem jeweils zwei benachbarte Batteriezellen 310 mit dem Mittelbereich zwischen zwei Flachrohren 130 angeordnet sind. Zwischen jeweils den Zellen 310 zugewandten Flächen der Flachrohre 130 und Ummantelungen der Zellen 310 besteht eine Klebung oder ein Verguss 1010 zur Anbindung der Batteriezellen 310 an die Flachrohre 130 des Kühlers. Die Flachrohre 130 können jeweils eine Mehrzahl von Kühlkanälen aufweisen.

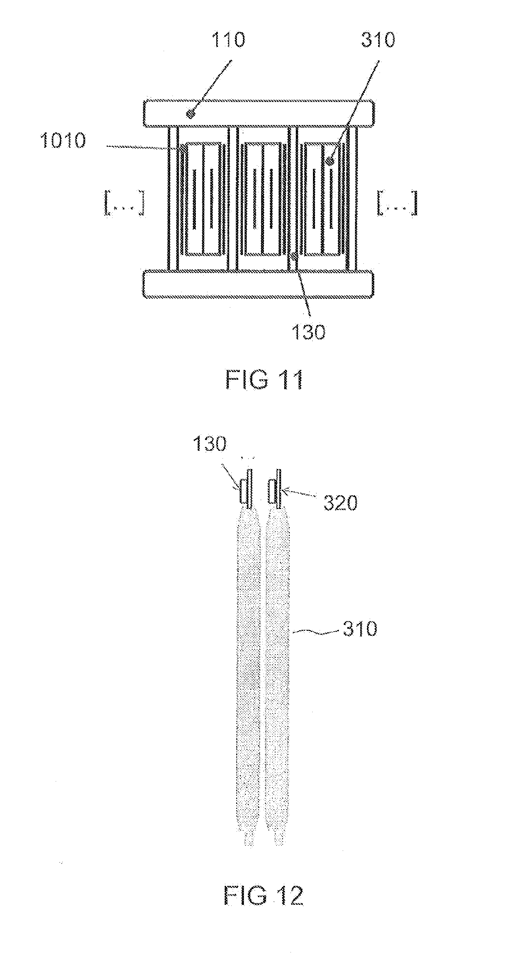

Fig. 11 zeigt eine weitere Ansicht der Energiespeichervorrichtung aus Fig. 10. Dabei ist eine paarweise Anordnung der Zellen 310 zwischen den Flachrohren 130 und den mit den Flachrohren 130 verbundenen Sammelkästen 110, 120 gezeigt.

Im Folgenden sei die im Zusammenhang mit den Figuren 9 bis 11 beschriebene Mantelkühlung von Batteriezellen 310 über Flachrohre 130 an Sammelkästen 110, 120 sowie eine Verwendung von Fertigungsverfahren aus der Kühlmittelkühlerherstellung zur Herstellung von Batteriekühlern 100 ausführlich beschrieben.

Wiederum können bereits serienmäßig hergestellte Flachrohrkühler bzw. - verdampfer ohne Wellrippenprofil und mit gegebenenfalls modifizierten Sammelkästen eingesetzt und entsprechend angepasst werden Auch können bestehende Fertigungsanlagen wie z.B. Durchlauföfen zusammen mit heute gängigen Teilen wie Kühlmittelkühlern zusammen genutzt werden.

Die Zellen 310 sind z.B. durch Kleben direkt an die Flachrohre 130 angebunden. Die Positionierung ist mittig und nicht mit der gesamte Mantelfläche der Zelle 310 in Kontakt. Die Wärmeabfuhr der nicht kontaktierten Fläche erfolgt durch Wärmeleitung über den Zellmantel. Je nach Bedarf an Kühlleistung können ein oder mehrere Flachrohrkühler bzw. -verdampfer um die Zellen 310 herum angeordnet werden; alternativ kann auch die Breite der Rohre 130 angepasst werden, sofern die Batteriezelle 310 selbst keine ausreichende innere Wärmeleitung bereitstellen kann. Die Flachrohre 130 können mit Kühl- oder Kältemittel betrieben werden. Die Verwendung von Rohren 130 an Stelle von Kühlplatten verringert das Gewicht der gesamten Kühlung. Zur thermischen Kontaktierung kann bei Bedarf der Zellverbund aus Kühler und Zellen 310 mit einer Umhausung versehen werden und zu einer stoffschlüssigen Einheit vergossen werden. Die Umhausung kann am Zellverbund verbleiben, z.B. in als Isolationsbox, oder nach Aushärten der Vergussmasse entfernt werden.

Alternativ kann der Zellverbund auch über eine Spannvorrichtung thermisch kontaktiert werden. Dabei besteht lediglich eine Berührung und kein Stoffschluss zwischen Flachrohr 130 und Zelle 310. Die Spannvorrichtung kann dabei beispielsweise als Bauchbinde oder als Spannblech ausgebildet sein. Zur elektrischen Isolation gegenüber den gegebenenfalls auf Potential liegenden Batteriezellen 310 kann der Kühler mit Schutzbeschichtungen wie z.B. Lack versehen werden.

Alternativ können Kühlplatten mit Kühlblechen angebracht werden. Eine weitere Möglichkeit wäre, die Flachrohre 130 über Kühlbleche an die Zelle 310 anzubinden.

Fig. 12 zeigt eine Ansicht einer Energiespeichervorrichtung gemäß einem weiteren Ausführungsbeispiel. Gezeigt ist eine Anordnung aus elektrochemischen Energiespeichereinheiten 310 mit Ableitern 320 und Flachrohren 130. Gemäß dem in Fig. 12 gezeigten Ausführungsbeispiel kontaktieren die Flachrohre 130 die Ableiter 320 direkt. Jeweils ein Flachrohr 130 ist dabei in einer Aussparung zwischen zwei benachbarter Ableiter 320 angeordnet und mit einem der beiden Ableiter 320 verbunden und von dem jeweils anderen Ableiter 320 beabstandet. Die Flachrohre 130 können Kühlkanäle der in den Figuren 1 und 2 gezeigten Kühlvorrichtung darstellen.

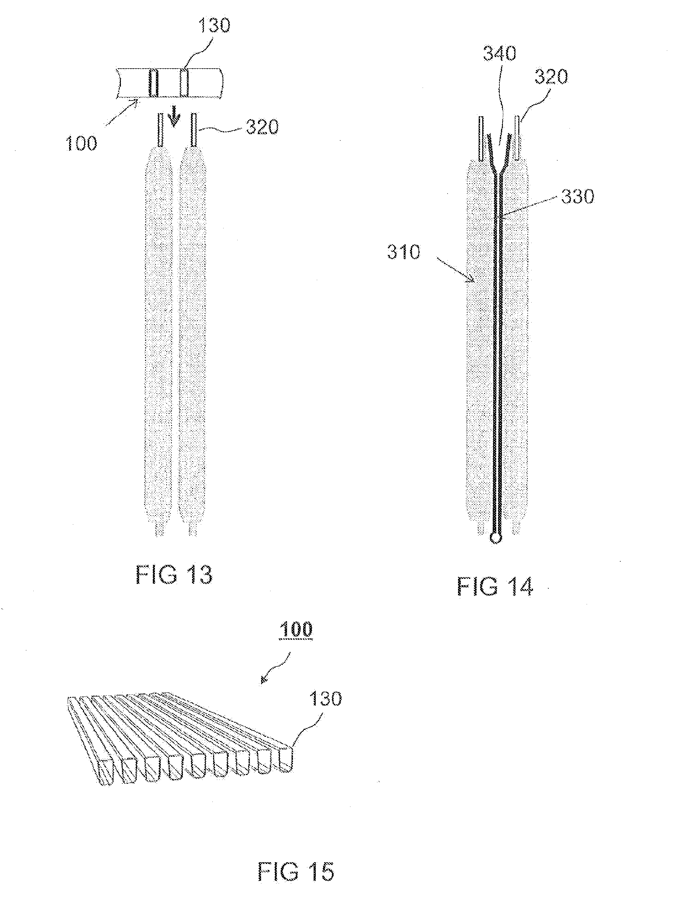

In Fig. 13 ist eine Montage der erfindungsgemäßen Anordnung aus Fig. 12 illustriert. Es ist zu erkennen, dass der Abstand zwischen den Flachrohren 130 des Kühlers 100 so dimensioniert ist, dass im zusammengebauten Zustand der Anordnung jeweils ein Flachrohr 130 einen Ableiter 320 kontaktiert.

Bei dem im Zusammenhang mit Figuren 12 und 13 geschilderten Ausführungsbeispiel einer Ableiterkühlung von Batteriezellen 310 über Flachrohre 130 an Sammelkästen können die Ableiter 320 der Zellen 310 z.B. durch Kleben direkt an die Flachrohre 130 angebunden sein. Dies ist vor allem vorteilhaft bei Ableitern 320, die auf einer Seite der Zelle 310 positioniert sind. Die Wärmeabfuhr erfolgt direkt aus der Zelle 310 über die Ableiter 320 in die Wärmesenke 130. Für eine ausreichende Anbindungsfläche können die Ableiter 320 verlängert werden. Damit ist ebenfalls eine gute Montage von Zellverbindern im elektrischen Pfad möglich. Die Flachrohre 130 können mit Kühl- oder Kältemittel betrieben werden. Die Verwendung von Rohren 130 an Stelle von Kühlplatten verringert das Gewicht der gesamten Kühlung. Zur elektrischen Isolation gegenüber den Ableitern 320 und zur Trennung von thermischem und elektrischem Pfad kann der gesamte Kühler 100 einschließlich der Flachrohre 130 mit Schutzbeschichtungen, z.B. Lack, versehen werden.

Alternativ können Kühlplatten mit Kühlblechen angebracht werden. Eine weitere Möglichkeit wäre, die Flachrohre 130 über Kühlbleche an die Zelle 310 anzubinden oder die Flachrohre 130 direkt am Zellmantel anzubringen.

Fig. 14 zeigt eine erfindungsgemäße Anordnung aus zwei Zellen 310 zwischen denen ein gefaltetes Kühlblech 330 angeordnet ist. Das gefaltete Kühlblech 330 weist zwei Schenkel auf, die jeweils an einer Hauptseite der Zellen 310 anliegen. In einem Endabschnitt folgen die Schenkel jeweils einer Kontur eines Randbereichs der Zellen 310, so dass die Schenkel jeweils eine Biegung zu den Fortsätzen 320 der Zellen 310 aufweisen. Somit ist bei dem in Fig. 14 gezeigten Ausführungsbeispiel zwischen den Endabschnitten der Schenkel des gefalteten Kühlblechs 330 eine trichterförmige Aussparung 340 gebildet.

Fig. 15 zeigt eine perspektivische Darstellung eines Ausführungsbeispiels einer für die Anordnung aus Fig. 14 geeigneten Kühlvorrichtung 100. Es ist ersichtlich, dass die Kühlvorrichtung 100 parallelverlaufende, keilförmige Flachrohre 130 aufweist.

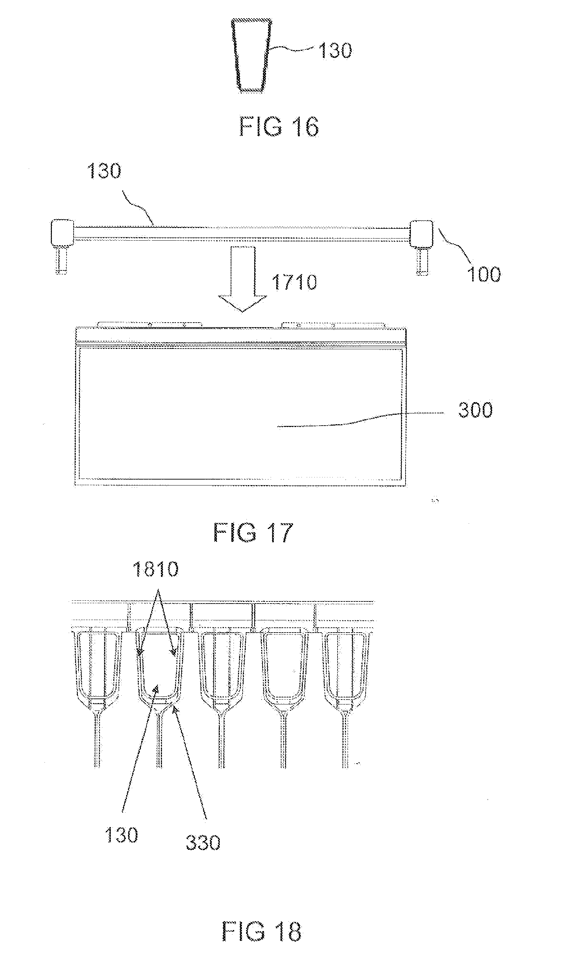

Fig. 16 zeigt einen Querschnitt eines der Flachrohre 130 aus Fig. 15. Es ist zu erkennen, dass eine Außenkontur des Flachrohres 130 im Wesentlichen einer Form der in Fig. 14 gezeigten trichterförmigen Aussparung des Endbereichs des Kühlblechs entspricht.

Fig. 17 zeigt eine Darstellung einer Montage der Flachrohre eines Flachrohrkühlers 100 an Kühlbleche eines Zellstapels 300. Ein Pfeil 1710 deutet die Richtung an, in der der Kühler 100, z.B. durch Einkleben, mit dem Zellstapel 300 verbunden wird.

Fig. 18 zeigt eine Schnittdarstellung einer Anordnung aus Flachrohren 130 und Kühlblechen 330, wie sie infolge einer im Zusammenhang mit Fig. 17.illustrierten Montage vorliegen kann. Die keilförmigen Flachrohre 130 liegen mit ihren Außenflächen an den Innenflächen der durch die gefalteten Kühlbleche 330 gebildeten trichterförmigen Aussparungen an. Ein Kleber 1810 stellt eine Anbindung der Kühlbleche 330 an die Flachrohre 130 bereit.

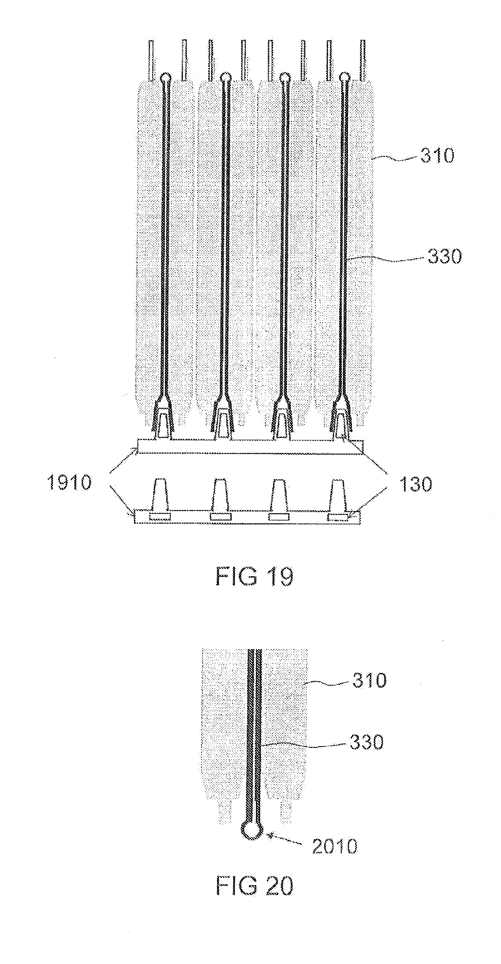

Fig. 19 zeigt eine Darstellung einer Energiespeichervorrichtung gemäß einem alternativen erfindungsgemäßen Ausführungsbeispiels. Gezeigt sind jeweils Paare von Zellen 310, zwischen den jeweils ein gefaltetes Kühlblech 330 angeordnet ist. Zwischen benachbarten Paaren von Zellen 310 kann kein Kühlblech angeordnet sein. Die gefalteten Kühlbleche können wie anhand von Fig. 14 beschrieben, ausgeformt sein. Gemäß diesem Ausführungsbeispielen können die Kühlkanäle 130 mit einer Platte 1910 verbunden sein. Somit ist in Fig. 19 eine Anordnung und Positionierung aus gefalteten Kühlblechen 330 und einer Platte 1910 mit Kanälen 130 gezeigt. Bei dem hier gezeigten Ausführungsbeispiel kann die Kühlplatte 1910 z.B. ein Extrusionsteil mit Kühlfortsätzen sein, das die Rohre bzw. Kühlkanäle 130 aufweist.

In Fig. 19 sind zwei mögliche Ausführungen der Kühlplatte 1910 gezeigt. Bei einer Ausführungsform sind die Kanäle 130 in den Fortsätzen der Kühlplatte 1910 angeordnet. In der Darstellung in Fig. 19 ist die Kühlplatte 1910 in dieser Ausführung an den Kühlblechen angeordnet. Alternativ können die Kanäle 130 auch direkt in der Kühlplatte 1910, benachbart zu den Fortsätzen, angeordnet sein, wie unten in der Darstellung gezeigt.

Fig. 20 zeigt eine Detailansicht eines Faltbereichs des gefalteten Kühlblechs 330 zwischen zwei Zellen 310. Zwischen den Schenkeln ist eine Öffnung 2010 für eine Aufnahme beispielsweise von Stiften zur Halterung der Energiespeichervorrichtung gebildet.

Zur Kühlung von Batteriezellen 310 über Flachrohre 130 an Sammelkästen können gemäß den Ausführungsbeispielen aus den Figuren 14 bis 20 beispielsweise eine oder mehrere Zellen 310 an ein doppeltes Kühlblech 330 z.B. durch Kleben angebunden sein. Das doppelte, symmetrische Kühlblech 330 besteht aus einem mittig umgeschlagenen Blech, dessen offene Enden eine V-bzw. Keil-Öffnung 340 bilden. Diese Form erleichtert die Montage des Flachrohrkühlers 100, z.B. durch Kleben mit oder ohne wärmeleitfähigen Kleber.
Die Verwendung von keilförmigen Flachrohren 130 verbessert die Montage zusätzlich und erlaubt eine gute Verklebung zwischen Flachrohr 130 und V- bzw. keilförmig ausgestalteten Kühlblechen 330. Die Rohre 130 können dafür als Extrusionsprofil ausgestaltet sein. Durch die keilförmige Anbindung vergrößert sich die Kontaktfläche im Vergleich zu einer parallelen Anbindung.

Die Flachrohre 130 können auch als ein einziges Extrusionsteil ausgestaltet sein und z.B. in Form einer Platte 1910 mit aufgesetzten Rohren 130 auch auf der gegenüberliegenden Seite der Ableiter angebracht werden. Dadurch kann die Kühlung gleichzeitig strukturelle Aufgaben übernehmen. Die Strömungskanäle können entweder in den Rohren 130 oder in der Platte 1910 liegen. Mehrere Zellen mit Kühlblechen können zu einem Modul mit einem Extrusionsteil zusammengefasst werden.

Die Kühlbleche 330 können im Abkantbereich rund ausgeformt sein. Beim umgeschlagenen Kühlblech 330 wird dieser Bereich dadurch rohrförmig und kann als Aufnahme 2010 für Stifte o.ä. dienen. Diese eingesetzten Stifte können z.B. in einer Aufnahme des Gehäuses oder eines anderen Strukturteils eingerastet werden. Dies ermöglicht eine einfache Montage des Moduls in einen Gesamtaufbau.

Die beschriebenen Ausführungsbeispiele sind nur beispielhaft gewählt und können miteinander kombiniert werden.

## Patentansprüche

1. Energiespeichervorrichtung (500; 600; 700) mit folgenden Merkmalen:
einer Mehrzahl von Kühlkanälen (130), die voneinander beabstandet parallel in einer Ebene angeordnet und ausgebildet sind, um von einem Kühlfluid durchströmt zu werden;
mindestens einem Sammelkasten (110, 120) der in der Ebene mit und senkrecht zu der Mehrzahl von Kühlkanälen angeordnet und
mit denselben verbunden ist, um das Kühlfluid aus denselben aufzunehmen oder an dieselben abzugeben; und
einem Stapel aus einer Mehrzahl von elektrochemischen Energiespeichereinheiten (310), die so angeordnet sind, dass zwischen zwei benachbarten Kühlkanälen der Mehrzahl von Kühlkanälen jeweils mindestens eine Energiespeichereinheit aus der Mehrzahl von elektrochemischen Energiespeichereinheiten angeordnet ist,
wobei die Kühlkanäle der Mehrzahl von Kühlkanälen (130) als Flachrohre ausgebildet ist, wobei jede der Mehrzahl von elektrochemischen Energiespeichereinheiten (310) in mindestens einem verjüngten Randbereich einen Fortsatz (320) aufweist, derart,
dass zwischen den Fortsätzen der Mehrzahl von elektrochemischen Energiespeichereinheiten jeweils Aussparungen (340) gebildet sind, und wobei die Kühlkanäle (130) in den Aussparungen angeordnet sind , **dadurch gekennzeichnet, dass** zwischen den Fortsätzen (320) und den Kühlkanälen (130) Isolatoren (710) angeordnet sind, wobei zwischen benachbarten elektrochemischen Energiespeichereinheiten (310) Kühlbleche (330) angeordnet sind, wobei die Kühlbleche thermisch mit den Kühlkanälen (130) gekoppelt sind und die Kühlbleche (330) auf einer Höhe des verjüngten Randbereichs eine Biegung in Richtung des Fortsatzes (320) einer benachbarten elektrochemischen Energiespeichereinheit (310) aufweisen.

2. Energiespeichervorrichtung (500; 600; 700) gemäß Anspruch 1, **dadurch gekennzeichnet, dass** die elektrochemischen Energiespeichereinheiten (310) jeweils eine Ummantelung aufweisen und die Fortsätze (320) durch Siegelungen der Ummantelungen gebildet sind.

3. Energiespeichervorrichtung (500; 600; 700) gemäß einem der vorangegangenen Ansprüche, **dadurch gekennzeichnet, dass** die Mehrzahl von elektrochemischen Energiespeichereinheiten (310) jeweils mindestens einen Stromableiter aufweist, der den Fortsatz (320) ausbildet.

4. Energiespeichervorrichtung (500; 600; 700) gemäß einem der vorangegangenen Ansprüche, **dadurch gekennzeichnet, dass** die zwischen benachbarten elektrochemischen Energiespeichereinheiten (310) angeordneten Kühlbleche (330) gefaltet sind, und auf einer Höhe des verjüngten Randbereichs eine Biegung in Richtung der Fortsätze (320) benachbarter elektrochemischer Energiespeichereinheiten aufweisen.

5. Energiespeichervorrichtung (500; 600; 700) gemäß einem der vorangegangenen Ansprüche, **dadurch gekennzeichnet, dass** jeder der Mehrzahl von Kühlkanälen (130) einen Kühlfortsatz aufweist und die Mehrzahl von elektrochemischen Energiespeichereinheiten (310) so angeordnet ist, dass zwischen zwei benachbarten Kühlfortsätzen der Mehrzahl von Kühlkanälen jeweils mindestens eine elektrochemische Energiespeichereinheit aus der Mehrzahl von elektrochemischen Energiespeichereinheiten angeordnet ist.

6. Energiespeichervorrichtung (500; 600; 700) gemäß einem der vorangegangenen Ansprüche, **dadurch gekennzeichnet, dass** die Mehrzahl von Kühlkanälen (130) in oder auf einer Kühlplatte (1910) angeordnet ist.

7. Energiespeichervorrichtung (500; 600; 700) gemäß einem der vorangegangenen Ansprüche, **dadurch gekennzeichnet, dass** jeweils ein Mittelbereich der mindestens einen elektrochemischen Energiespeichereinheit (310) aus der Mehrzahl von elektrochemischen Energiespeichereinheiten zwischen zwei benachbarten Kühlkanälen (130) der Mehrzahl von Kühlkanälen angeordnet ist.

## Claims

1. An energy store device (500; 600; 700) having the following features:
a multiplicity of cooling ducts (130) which are arranged spaced apart from one another and substantially parallel in a plane and which are formed such that a cooling fluid can flow through them;
at least one collecting tank (110, 120) which is arranged in the plane with and substantially perpendicular to the multiplicity of cooling ducts and is connected to said cooling ducts in order to receive the cooling fluid therefrom or deliver the cooling fluid thereto; and
a stack of a multiplicity of electrochemical energy store units (310) which are arranged such that in each case at least one energy store unit of the multiplicity of electrochemical energy store units is arranged between two adjacent cooling ducts of the multiplicity of cooling ducts, wherein the multiplicity of cooling ducts (130) are formed as flat tubes, wherein each of the multiplicity of electrochemical energy store units (310) has, in at least one tapered edge region, a projection (320) such that recesses (340) are formed in each case between the projections of the multiplicity of electrochemical energy store units, and wherein the cooling ducts (130) are arranged in the recesses,
**characterized in that** the insulators (710) are arranged between the projections (320) and the cooling ducts (130), wherein the cooling sheets (330) are arranged between adjacent electrochemical energy store units (310), wherein the cooling sheets are thermally coupled to the cooling ducts (130) and the cooling sheets (330) have, at a level of the tapered edge region, a bend in the direction of the projection (320) of an adjacent electrochemical energy store unit (310).

2. The energy store device (500; 600; 700) as claimed in claim 1, in which the electrochemical energy store units (310) each have a casing and the projections (320) are formed by sealing formations of the casings.

3. The energy store device (500; 600; 700) as claimed in one of the preceding claims, in which the multiplicity of electrochemical energy store units (310) each have at least one current conductor which forms the projection (320).

4. The energy store device (500; 600; 700) as claimed in one of the preceding claims, in which the cooling sheets (330) arranged between adjacent electrochemical energy store units (310) are folded and, at a level of the tapered edge region, have a bend in the direction of the projections (320) of adjacent electrochemical energy store units.

5. The energy store device (500; 600; 700) as claimed in one of the preceding claims, in which each of the multiplicity of cooling ducts (130) has a cooling projection, and the multiplicity of electrochemical energy store units (310) are arranged such that in each case at least one electrochemical energy store unit of the multiplicity of electrochemical energy store units is arranged between two adjacent cooling projections of the multiplicity of cooling ducts.

6. The energy store device (500; 600; 700) as claimed in one of the preceding claims, in which the multiplicity of cooling ducts (130) is arranged in or on a cooling plate (1910).

7. The energy store device (500; 600; 700) as claimed in one of the preceding claims, in which in each case one central region of the at least one electrochemical energy store unit (310) of the multiplicity of electrochemical energy store units is arranged between two adjacent cooling ducts (130) of the multiplicity of cooling ducts.

## Revendications

1. Dispositif accumulateur d'énergie (500; 600; 700) ayant les caractéristiques suivantes et comprenant:
une pluralité de conduits de refroidissement (130) qui sont disposés et configurés en étant parallèles dans un plan et espacés les uns des autres, pour être traversés par un fluide de refroidissement;
au moins un bac collecteur (110, 120) qui est disposé dans le plan comprenant la pluralité des conduits de refroidissement et en étant perpendiculaire à ladite pluralité de ceux-ci et en étant relié à ces mêmes conduits de refroidissement, pour recevoir le fluide de refroidissement provenant de ces mêmes conduits de refroidissement ou pour leur fournir ce même fluide de refroidissement; et une pile se composant d'une pluralité d'ensembles accumulateurs d'énergie électrochimiques (310) qui sont disposés de manière telle, qu'au moins un ensemble accumulateur d'énergie faisant partie de la pluralité des ensembles accumulateurs d'énergie électrochimiques soit disposé à chaque fois entre deux conduits de refroidissement adjacents faisant partie de la pluralité des conduits de refroidissement, où les conduits de refroidissement faisant partie de la pluralité des conduits de refroidissement (130) sont configurés comme des tubes plats, où chacun des ensembles faisant partie de la pluralité des ensembles accumulateurs d'énergie électrochimiques (310) présente un prolongement (320) dans au moins une zone de bordure rétrécie, de manière telle que des évidements (340) soient formés à chaque fois entre les prolongements de la pluralité des ensembles accumulateurs d'énergie électrochimiques, et où les conduits de refroidissement (130) sont disposés dans les évidements, **caractérisé en ce que** des isolants (710) sont disposés entre les prolongements (320) et les conduits de refroidissement (130), où des tôles de refroidissement (330) sont disposées entre des ensembles accumulateurs d'énergie électrochimiques adjacents (310), où les tôles de refroidissement sont couplées thermiquement aux conduits de refroidissement (130), et les tôles de refroidissement (330) présentent, à la hauteur de la zone de bordure rétrécie, une courbure en direction du prolongement (320) d'un ensemble accumulateur d'énergie électrochimique adjacent (310).

2. Dispositif accumulateur d'énergie (500; 600; 700) conformément à la revendication 1, **caractérisé en ce que** les ensembles accumulateurs d'énergie électrochimiques (310) présentent à chaque fois une gaine enveloppante, et les prolongements (320) sont formés par des scellements des gaines enveloppantes.

3. Dispositif accumulateur d'énergie (500; 600; 700) conformément à l'une ou l'autre des revendications précédentes, **caractérisé en ce que** la pluralité des ensembles accumulateurs d'énergie électrochimiques (310) présente à chaque fois au moins un collecteur de courant qui forme le prolongement (320).

4. Dispositif accumulateur d'énergie (500; 600; 700) conformément à l'une quelconque des revendications précédentes, **caractérisé en ce que** les tôles de refroidissement (330) disposées entre des ensembles accumulateurs d'énergie électrochimiques adjacents (310) sont pliées et présentent, à la hauteur de la zone de bordure rétrécie, une courbure en direction des prolongements (320) d'ensembles accumulateurs d'énergie électrochimiques adjacents.

5. Dispositif accumulateur d'énergie (500; 600; 700) conformément à l'une quelconque des revendications précédentes, **caractérisé en ce que** chacun des conduits de refroidissement (130) formant la pluralité de ces mêmes conduits présente un prolongement de refroidissement, et la pluralité des ensembles accumulateurs d'énergie électrochimiques (310) est disposée de manière telle, qu'au moins un ensemble accumulateur d'énergie électrochimique faisant partie de la pluralité des ensembles accumulateurs d'énergie électrochimiques soit disposé à chaque fois entre deux prolongements de refroidissement adjacents de la pluralité des conduits de refroidissement.

6. Dispositif accumulateur d'énergie (500; 600; 700) conformément à l'une quelconque des revendications précédentes, **caractérisé en ce que** la pluralité des conduits de refroidissement (130) est disposée dans ou sur une plaque de refroidissement (1910).

7. Dispositif accumulateur d'énergie (500; 600; 700) conformément à l'une quelconque des revendications précédentes, **caractérisé en ce qu'**une zone centrale de l'ensemble accumulateur d'énergie électrochimique (310) au moins au nombre de un et faisant partie de la pluralité des ensembles accumulateurs d'énergie électrochimiques est disposée entre deux conduits de refroidissement adjacents (130) de la pluralité des conduits de refroidissement.
